# FASCICULE DE BREVET EUROPEEN

(11) **EP 0 443 292 B1**
(45) Date de publication et mention de la délivrance du brevet: **20.10.1993**
(21) Numéro de dépôt: 90810117.3
(22) Date de dépôt: 19.02.1990
(51) Int. Cl.: B41C 3/06, B29C 59/02, B41D 7/02, B44B 5/00, B44B 5/02

(54) **Installation et procédé pour la fabrication d'un moule plastique à multiples empreintes, pour la reproduction de plaques d'impression taille-douce**
Vorrichtung und Verfahren zum Herstellen einer plastischen Mehrfachform für die Nachbildung von Tiefdruckplatten
Device and method for the manufacture of a multiple plastic mould for the reproduction of intaglio printing plates

(43) Date de publication de la demande: 28.08.1991
(73) Titulaire: DE LA RUE GIORI S.A., 1003 Lausanne (CH)
(72) Inventeur: Coluzzi, Antonio, I-Lurago Marinone (IT)
(74) Mandataire: Jörchel, Dietrich R.A.

(56) Documents cités:
- EP-A- 0 335 830
- DE-B- 1 155 231
- FR-A- 2 223 154

## Description

La présente invention concerne une installation pour la fabrication d'un moule sous la forme d'une plaque plastique thermoformable à multiples empreintes, de préférence pour la reproduction des plaques d'impression taille-douce, à partir d'une plaque originale en métal comportant un dessin gravé ou en relief, au moyen de moulage par pression sous chauffage par haute fréquence de ladite plaque plastique, comprenant un bâti muni d'un dispositif porte-électrode pour supporter une électrode à plaque connectée à un appareil à haute fréquence, et un dispositif porte-plaque pour supporter la plaque originale à distance de, et opposée à, ladite électrode, au moins un coulisseau-cadre pour supporter la plaque plastique, disposé entre et déplaçable relativement à la plaque originale et ladite électrode selon deux directions horizontales perpendiculaires, et des moyens pour changer la distance entre lesdits dispositifs porte-électrode et porte-plaque.

Il est connu pour la fabrication de plaques d'impression taille-douce pour l'impression à la feuille, de partir d'une plaque métallique originale sur laquelle a été gravée avec minutie l'image à reproduire composée de lignes et zones gravées de profondeurs différentes. Etant donné que la plaque taille-douce disposée sur le cylindre porte-plaque comporte plusieurs empreintes identiques, notamment pour l'impression des billets de banque, disposées en rangées perpendiculaires, l'empreinte doit être multipliée et transférée sur la plaque taille-douce qui est en général en nickel. Une installation pour effectuer cette multiplication sur une plaque plastique thermoformable selon le préambule de la revendication 1 et comme décrit dans l'introduction a déjà été proposée dans la publication EP-A 335 830.

Dans le cas où il s'agit d'un moule positif à multiples empreintes, pour obtenir la plaque d'impression taille-douce, on connait le procédé suivant :

On applique sur la plaque positive une couche d'argent et on dépose sur la surface argentée par électrolyse une couche de cuivre. En retirant la plaque plastique positive, on obtient une plaque négative en cuivre appelée également matrice femelle ou matrice inférieure qui comporte les empreintes entaillées. La surface de cette plaque négative entre les empreintes doit être usinée afin d'assurer qu'elle est complètement lisse et continue. A partir de cette plaque négative en cuivre, on reproduit une plaque positive en nickel et ensuite une plaque négative en nickel qui est la plaque d'impression taille-douce proprement dite qui sera montée sur le cylindre porte-plaque. Cette plaque doit également subir un traitement de finition afin, d'une part, assurer que la surface entre les empreintes est lisse et continue et, d'autre part, que le dos de la plaque en contact avec le cylindre porte-plaque est également parfaitement lisse et continu. Afin d'augmenter la résistance à l'usure de la plaque taille-douce, on applique une couche de chrome.

Le but de la présente invention est d'améliorer l'installation pour la fabrication d'un moule ayant la forme d'une plaque plastique à multiples empreintes de telle manière que ces empreintes soient d'une qualité parfaite, sans risque de déformation de la planéité de la surface de la plaque plastique alentour de l'empreinte. Le moule sous la forme d'une plaque à multiples empreintes peut être un moule positif ou un moule négatif et sert, de préférence, comme base pour la fabrication d'une plaque d'impression taille-douce ayant un nombre déterminé d'empreintes identiques.

L'installation selon l'invention est caractérisée par la clause caractérisante de la revendication 1.

Les avantages de cette installation sont les suivants: grâce à une électrode à plaque dont le contour correspond à l'enveloppe du dessin et grâce à la bordure isolante entourant cette électrode, l'utilisation d'un chauffage par haute fréquence assure non seulement un chauffage plus rapide et plus uniforme, mais a pour effet que le chauffage est mieux localisé à la zone de l'empreinte à produire. En effet, lors du chauffage de la plaque plastique, il s'est révélé essentiel que, dans la mesure du possible, ce soit seulement cette zone de l'empreinte à produire qui est chauffée et non les régions adjacentes, pour éviter que ces dernières se déforment lors de l'opération de moulage. La plaque plastique en dehors des zones d'empreintes devrait rester absolument plane pour que cette plaque plastique à multiples empreintes puisse servir, sans traitement ultérieur de la surface, à la reproduction des plaques taille-douce, comme mentionné dans l'introduction.

Si l'on chauffe la plaque plastique par des moyens conventionnels, par exemple électriquement ou par circulation d'un fluide chaud, il est pratiquement impossible d'éviter que cette zone adjacente ne soit aussi chauffée; c'est pourquoi, avec les installations avec chauffage conventionnel, pour éviter un tel échauffement de la zone adjacente, il faut bien limiter la température de chauffage final, ce qui oblige par la suite de travailler avec une pression plus forte lors du moulage. Par contre, avec l'installation selon l'invention, étant donné que la région chauffée est limitée à la zone voulue, on peut travailler avec des températures plus élevées, ce qui permet de réduire la pression lors du moulage. Alors que, selon les installations avec chauffage conventionnel, on travaille avec une température d'environ 150° à 170°C et une pression de 100 à 200 kg/cm², avec l'installation selon l'invention on peut chauffer la plaque jusqu'à une température d'environ 200°C et appliquer une pression de 20 kg/cm² environ.

De préférence, au moins l'un des dispositifs porte-plaque et porte-électrode comprend des moyens de chauffage et de refroidissement, préférablement par circulation d'un liquide, pour un préchauffage des électrodes avant leur mise en contact avec la plaque plastique et pour le refroidissement après le moulage. En outre, il est avantageux que la première électrode à contour soit portée par un support isolant et qu'elle soit recouverte, avec sa bordure, par une couche mince isolante d'un matériau rigide, préférablement du mica.

Des formes d'exécution préférées de l'installation sont définies par les revendications dépendantes.

L'invention concerne également un procédé de mise en action de l'installation selon l'invention défini par la revendication 9. Une variante préférée est décrite dans la revendication 10.

Deux formes d'éxécution de l'installation seront décrites à l'aide du dessin annexé.

La figure 1 est une vue en perspective d'une première forme d'éxécution de l'installation pour la mise en oeuvre du procédé.

La figure 2 est une vue latérale partielle et agrandie de l'installation.

La figure 3 est une vue latérale et agrandie d'une variante de l'installation.

La figure 4 est une vue en plan d'une plaque originale sur laquelle on a illustré schématiquement le dessin et la ligne de contour, ou l'enveloppe, qui entoure la zone du dessin, cette ligne de contour est bien entendu fictive et n'a été représentée que pour les besoins de la description.

La figure 5 représente l'électrode à plaque ayant un contour correspondant à celui du dessin.

La figure 6 est une vue de la même électrode, mais placée sur un support isolant et entourée d'une bordure isolante.

La figure 7 est une vue en coupe selon VII-VII de la figure 6.

La figure 8 représente une deuxième forme d'éxécution de l'installation montrant seulement les éléments essentiels pour l'invention.

La figure 9 est une vue schématique selon la direction des flèches IX-IX de la figure 8.

La figure 10 est une vue en coupe du dispositif porte-électrode des figures 8 et 9, selon X-X de la figure 9, à une échelle agrandie.

La figure 11 est une vue analogue à la figure 6, avec les différences que la forme de l'électrode ne correspond pas exactement au contour du dessin, mais à l'enveloppe plus grossière de celui-ci et que la bordure couvre tout le support isolant et forme une seule pièce avec celui-ci.

La figure 12 est une vue en coupe selon XII-XII de la figure 11.

Pour plus de clarté, on décrira d'abord les installations de mise en oeuvre du procédé et par la suite le procédé.

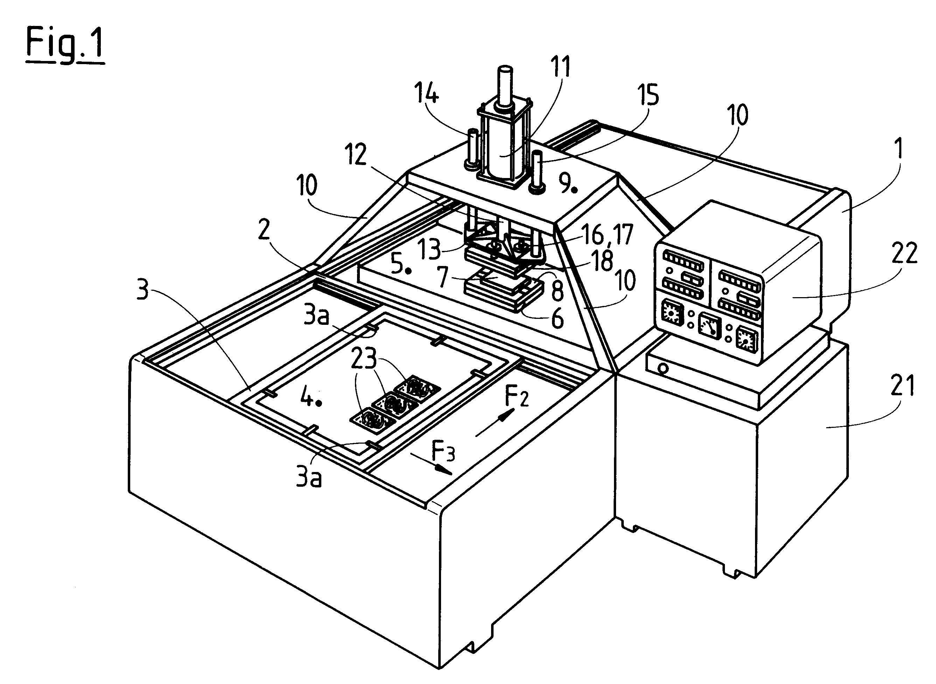

L'installation selon la figure 1 comprend un bâti 1 servant de base au reste de l'installation. Un premier coulisseau-cadre 2 déplaçable dans une direction horizontale F2 est monté sur le bâti 1. Un second coulisseau-cadre 3 est monté à l'intérieur du coulisseau-cadre 2, déplaçable à l'intérieur de celui-ci dans une direction F3. A l'intérieur du second coulisseau-cadre 3, est placée une plaque plastique 4 qui est fixée par des pinces 3a et constituera le moule a multiples empreintes. Quelques empreintes 23 sont indiquées sur la figure 1.

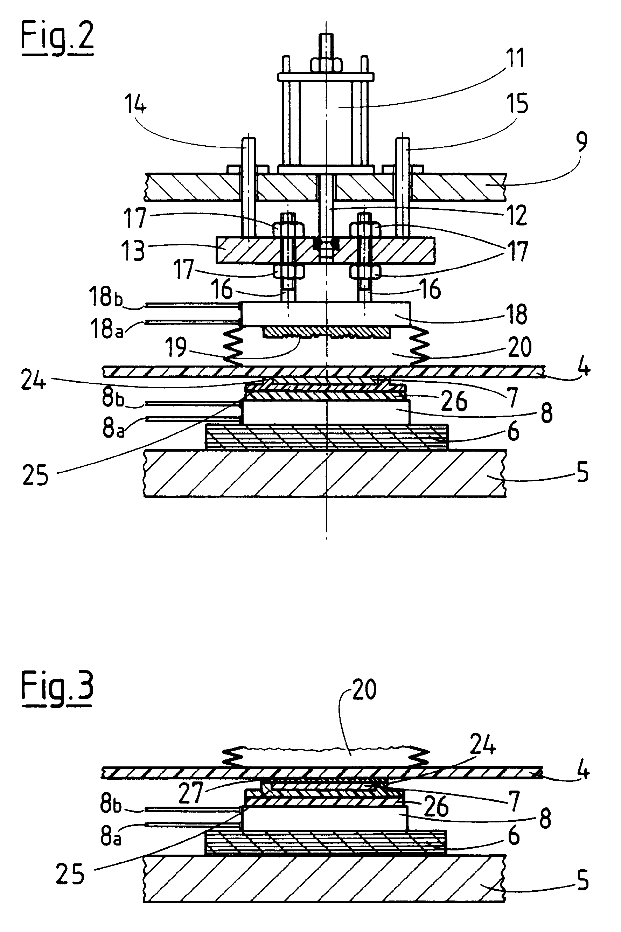

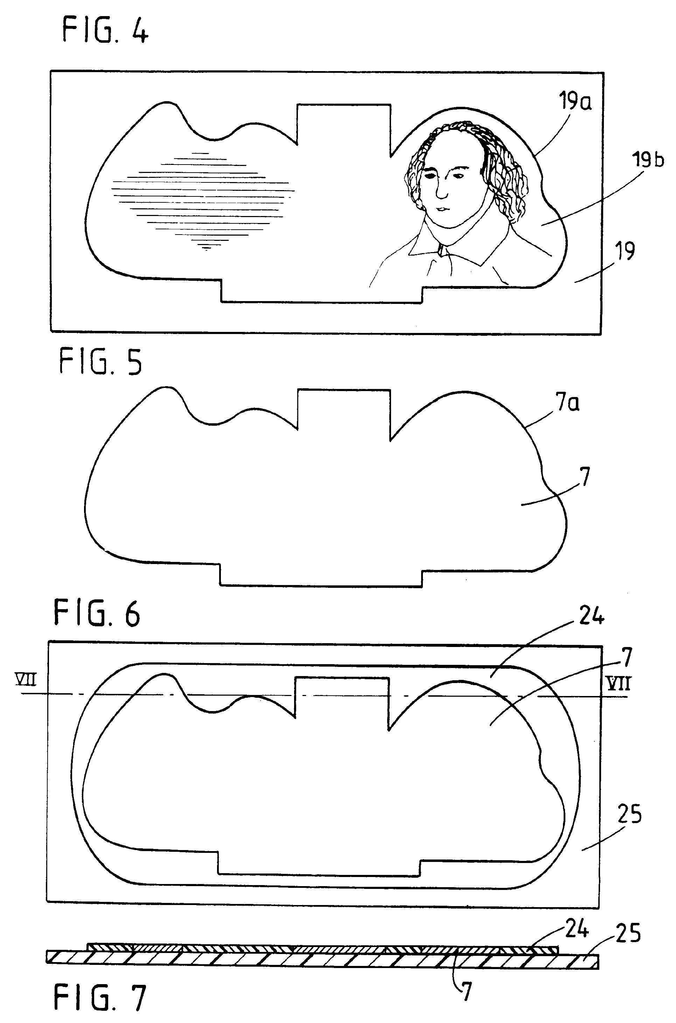

Au milieu de la région dans laquelle se déplace le premier coulisseau-cadre 2, et au-dessous du plan de coulissement, est disposé le dispositif porte-électrode. Comme montré sur la figure 2, ce dispositif comprend une selle d'appui 5 solidaire du bâti 1, sur laquelle est disposée une plaque isolante 6 supportant un dispositif de chauffage et de refroidissement 8 formé par une cage plate métallique, dans laquelle peut circuler un liquide, et qui est munie à cet effet de deux conduits 8a et 8b pour l'entrée et la sortie du liquide chaud ou froid, selon les besoins. Sur ce dispositif de chauffage et de refroidissement 8 repose une plaque isolante 26 sur laquelle est disposé un support isolant 25 portant une première électrode à plaque 7. L'arrangement et la configuration de cette électrode 7 seront décrits plus en détail, sur la base des figures 4 à 7.

A la verticale de l'électrode 7, se trouve un dispositif porte-plaque pour la fixation de la plaque originale 19 qui, dans l'exemple considéré, comporte un dessin gravé. Cette plaque originale 19 est utilisée comme une deuxième électrode. Ledit dispositif porte-plaque est installé au moyen d'un châssis 10 qui, dans l'exemple illustré sur la figure 1, comprend quatre jambes obliques et une plaque supérieure 9. Un verin à double effet 11 est fixé sur cette plaque 9 et la tige 12 du piston dudit vérin traverse la plaque 9 et porte, à son extrémité inférieure, le dispositif porte-plaque. Ce dernier est constitué par une plaque support 13 munie de deux tiges de guidage 14, 15 s'étendant parallèlement à la tige 12 du verin 11 et traversant la plaque supérieure 9. Par quatre tiges filetées 16 munies d'écrous 17 pour le réglage de niveau, est suspendu le porte-plaque proprement dit portant la plaque originale 19. Ce porte-plaque constitue à la fois un dispositif de chauffage et de refroidissement 18 formé par une cage plate métallique munie des deux conduits 18a et 18b servant à l'entrée et à la sortie du liquide chaud ou froid, selon les besoins.

Au-dessous du dispositif 18 est disposée une chambre 20 dans laquelle on peut créer un vide relatif. Cette chambre 20 est formée d'un soufflet dont l'extrémité supérieure est solidaire du dispositif 18 et l'extrémité inférieure est en contact étroit avec la plaque plastique 4.

Enfin, sur une console 21 est disposé un appareil à haute fréquence 22 ainsi que différentes commandes permettant, par exemple, le déplacement des coulisseaux-cadres 2 et 3 et la commande du verin 11. Dans l'exemple illustré sur les figures 1 et 2, l'électrode 7 est reliée à la borne sous tension de cet appareil à haute fréquence 22 tandis que la plaque originale 19 est mise à la terre, c'est-à-dire se trouve en contact avec le dispostif 8 en métal et les autres éléments du bâti métallique 1.

La figure 4 montre la plaque originale 19 avec un dessin gravé 19b qui s'étend dans une zone irrégulière marquée par une ligne de contour formant une enveloppe 19a de cette zone gravée. Bien entendu, cette ligne de contour n'existe pas en réalité, elle est indiquée sur la figure 4 pour bien illustrer la limite du dessin.

La figure 5 montre l'électrode 7 découpée telle que son contour 7a correspond à l'enveloppe 19a. Cette électrode 7, qui est de préférence une tôle de cuivre de 0,5 mm d'épaisseur environ, est fixée, selon les figures 6 et 7, par exemple par collage, sur un support isolant 25 de 1,5 à 2,0 mm d'épaisseur environ, et est entourée par une bordure isolante 24 collée sur le support isolant 25 et dont l'arête intérieure a la forme du contour de l'électrode 7 et épouse donc le bord de celle-ci. La bordure 24 a la même épaisseur que celle de l'électrode 7, leurs surfaces sont donc dans un même plan (figure 7).

Le support isolant 25 et la bordure 24 sont en matériau électriquement et thermiquement isolant, de préférence en silicone renforcé par des fibres de verre, découpés dans une bande élastique. Dans l'exemple considéré, la bordure 24 est une pièce séparée du support isolant 25 et n'entoure que la région adjacente à l'électrode 7, sans couvrir toute la surface du support isolant 25 dont les dimensions correspondent approximativement à la plaque originale 19 ou sont légèrement plus grandes. La largeur minimum de la bordure 24 devrait être de 5mm environ pour assurer à la fois un bon appui pour la plaque plastique 4 autour de l'empreinte lors du moulage et une bonne isolation électrique et thermique, pour que le chauffage soit concentré pratiquement sur la zone définie par le contour 7a de l'électrode 7. Sous ces conditions, on évite toute déformation de la surface de la plaque plastique alentour de l'empreinte et garantit une parfaite planéité en dehors des empreintes, planéité qui est essentielle pour la fabrication ultérieure des plaques d'impression taille-douce.

Etant donné que le support isolant 25 est souple et relativement mince, on a prévu, selon la figure 2, encore une plaque isolante 26 en matériau rigide, par exemple de la bakélite, de 4 à 5 mm d'épaisseur, qui est donc placée entre le dispositif 8 et le support isolant 25 pour éviter la dissipation de l'énergie haute fréquence et pour donner un bon appui.

La connexion de l'électrode 7 à l'appareil à haute fréquence 22, non représentée sur les dessins, peut se faire à travers le support isolant 25.

Selon la variante de la figure 3, une mince plaque isolante rigide 27, de préférence en mica, ayant une épaisseur d'environ 0,7 à 1,0 mm, est placée sur ladite électrode et sa bordure 24. Par cet arrangement, on assure une empreinte parfaite, et évite que le joint entre le bord de l'électrode 7 et sa bordure puisse déranger la qualité de l'empreinte.

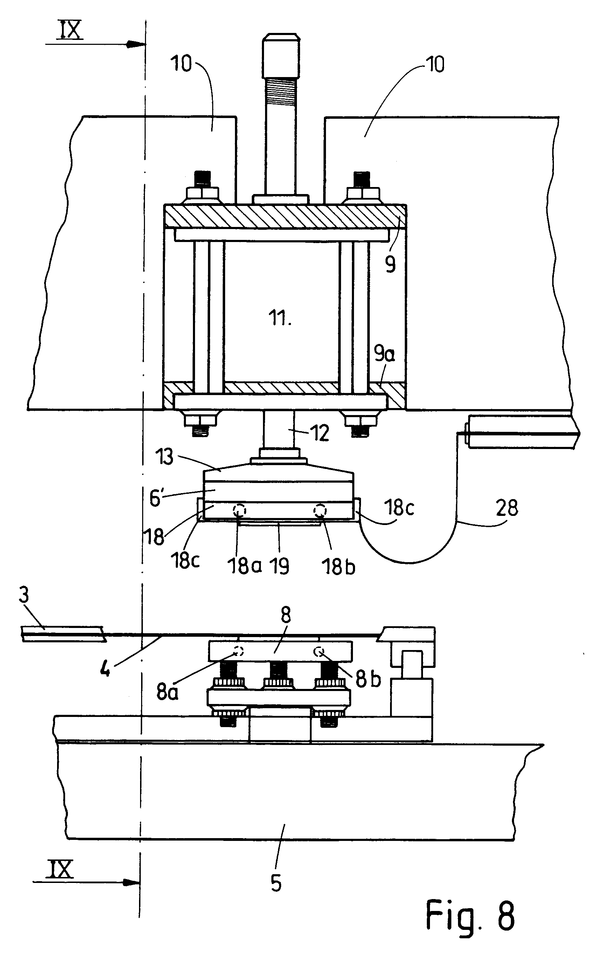

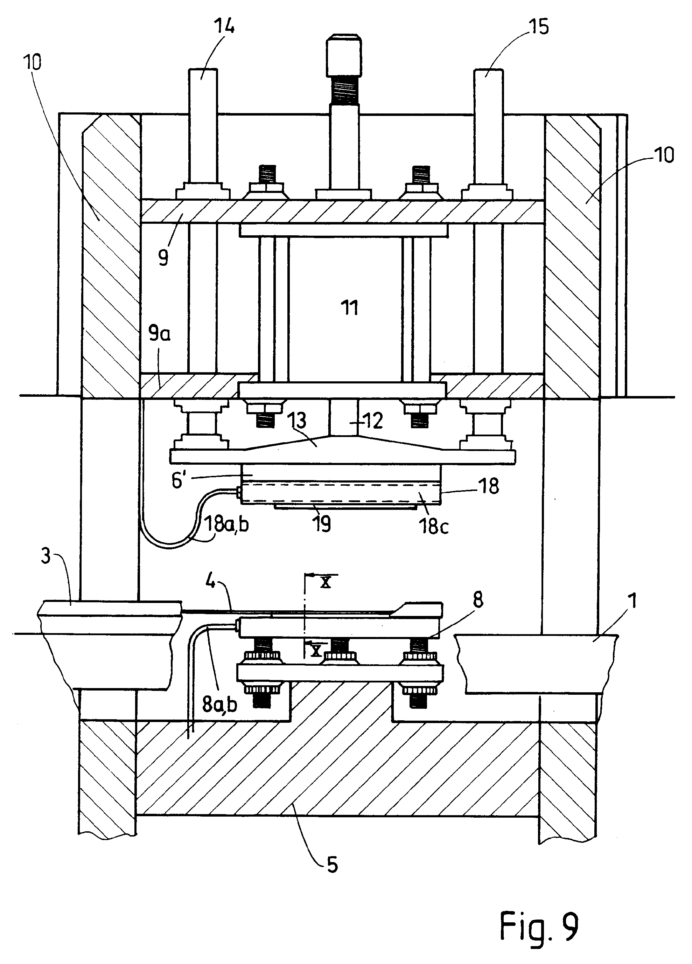

Les figures 8 à 10 montrent une deuxième forme d'éxécution de l'installation dans laquelle c'est la plaque originale 19 qui est reliée par une bande de cuivre 28 à la sortie sous tension de l'appareil à haute fréquence 22. Sur le châssis 10 est installé par l'intermédiaire de plaques 9, 9a, le vérin 11 et à l'extrémité de la tige 12 du piston de celui-ci est suspendue la plaque support 13 munie des tiges de guidage 14, 15 (figure 9). A cette plaque support 13 est fixée, par l'intermédiaire d'une plaque 6' isolante électriquement et thermiquement, le porte-plaque formé par le dispositif 18 de chauffage et de refroidissement muni des conduits 18a, 18b. La fixation de la plaque originale 19 est réalisée par l'intermédiaire d'un cadre de maintien 18c en contact métallique avec le dispositif 18 de telle manière que l'ensemble dispositif 18 et plaque originale 19 forment dans ce cas l'électrode à haut potentiel, la bande de cuivre 28 étant fixée à ce cadre 18c. L'installation selon les figures 8 et 9 travaille sans chambre à vide.

En ce qui concerne le porte électrode, il comprend de nouveau un dispositif de chauffage et de refroidissement 8, formé par une cage plate munie de deux conduits 8a, 8b pour la circulation du liquide chaud ou froid et qui est posée sans aucune isolation sur la selle d'appui 5 par l'intermédiaire d'un support à trois points.

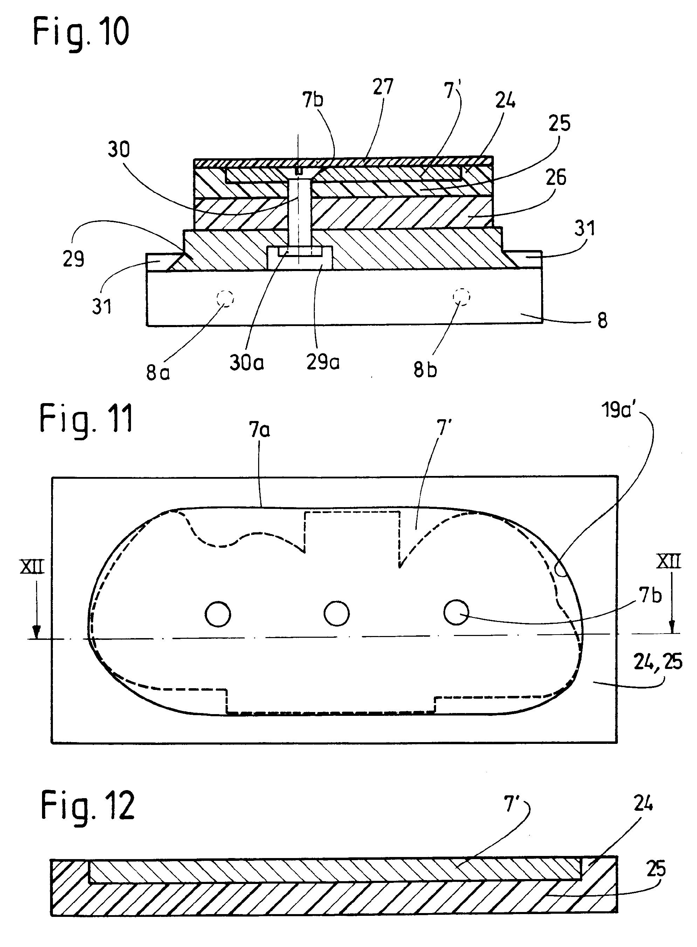

La figure 10 montre l'arrangement exact de ce porte électrode. Dans ce cas, il est prévu une plaque métallique 29 supportant la plaque isolante 26 sur laquelle est disposé le support isolant 25 portant l'électrode 7' entourée de la bordure isolante 24 qui forme une seule pièce avec ledit support 25. Tout l'ensemble est préassemblé au moyen de vis 30 qui traversent ces éléments et dont l'extrémité inférieure débouche dans un logement 29a de la plaque métallique 29 et se visse dans un écrou 30a. La tête des vis 30 est noyée dans des trous coniques 7b formés dans l'électrode 7' de sorte que ces vis 30 affleurent la surface de l'électrode. Il est également prévu une plaque de mica 27 au dessus de l'électrode 7 et de sa bordure 24. La plaque métallique 29 présente des bords inclinés qui lui permettent d'être fixée au dispositif 8 avec l'ensemble des autres éléments, au moyen de cales 31 présentant également des faces inclinées et qui pincent lesdits bords inclinés de la plaque métallique 29. Par cet arrangement l'électrode 7' est mise à la terre par l'intermédiaire des vis 30, du dispositif 8 et du bâti.

La pièce isolante formant le support 25 et la bordure 24 est de préférence une plaque souple en silicone, d'une épaisseur de 2 à 3 mm, sur la surface de laquelle un évidement de la forme du contour de l'électrode 7' a été creusé. La profondeur de cet évidement correspond à l'épaisseur de l'électrode, à savoir environ 0,5 mm. Pour cette raison, la bordure 24 couvre tout le support isolant 25 (figure 12).

Comme le montre la figure 11, le contour 7a de l'électrode 7' n'épouse pas exactement dans ce cas les détails du contour du dessin gravé, comme illustré sur la figure 4 et représenté en traits pointillés, mais correspond à une enveloppe 19a' plus grossière.

Bien entendu ces installations ne sont que des exemples de réalisation et on peut prévoir au lieu que ce soit seulement la plaque plastique 4 qui se déplace dans les deux directions F2, F3, que ce sont la plaque originale 19 et tout le dispositif porte-plaque avec le vérin 11 et l'électrode 7, 7' qui peuvent, soit se déplacer dans une direction horizontale F2 ou F3, et dans ce cas la plaque plastique 4 est déplaçable dans l'autre direction F3 ou F2, soit se déplacer dans les deux directions, et alors la plaque plastique 4 est fixe. Aussi, les dispositifs 8, 18 de chauffage et de refroidissement peuvent être d'un autre type.

Le procédé sera décrit à l'aide de l'installation selon les figures 8 à 12.

On prépare une plaque originale en métal 19 portant des lignes gravées de profondeurs différentes constituant le dessin à reproduire, et on la fixe au porte-plaque constitué par le dispositif de chauffage et de refroidissement 18 par l'intermédiaire de la plaque isolante 6'.

On prépare une tôle de cuivre formant l'électrode 7' découpée selon l'enveloppe 19a' du dessin et on la fixe dans la creusure du support isolant 25 de telle sorte qu'elle soit entourée par la bordure 24 (figure 11).

On prépare une plaque plastique 4 en matériau thermoformable par moulage et compression, par exemple en COBEX P.V.C., ayant pratiquement les mêmes dimensions que la plaque taille-douce désirée. On dispose cette plaque plastique 4 dans le coulisseau-cadre 3 et on la maintient par des pinces 3a réglables permettant de la maintenir tendue uniformément dans le coulisseau-cadre 3 (figure 1). A l'aide des deux coulisseaux-cadres 2 et 3, on amène la plaque plastique 4 dans une première position ajustée qui correspond à la position de la première empreinte 23 (figure 1). Dans cette position, la zone à déformer par moulage se trouve entre l'électrode 7' et la plaque originale 19 qui se trouve verticalement au-dessus de l'électrode 7'.

L'électrode 7' ainsi que la plaque originale 19 qui forme elle-même une électrode sont, dans la position levée de la plaque originale 19, préchauffées par circulation d'eau chaude à travers les deux dispositifs 8, 18 jusqu'à ce que ces électrodes atteignent une température comprise entre 40 et 50°C, notamment 45°C, ce qui dure généralement environ 2 minutes. Ce préchauffage permet une meilleure qualité de l'empreinte car on évite les problèmes de dilatations différenciées des éléments en contact, dilatations qui pourraient porter préjudice à l'empreinte.

Une fois la température de préchauffage atteinte, on descend la plaque originale 19, au moyen du vérin 11, jusqu'à ce qu'elle se trouve en contact avec la plaque plastique 4 et, en appliquant une légère pression de l'ordre de 5kg/cm², on applique le champ à haute fréquence à travers les deux électrodes jusqu'à ce que la plaque plastique 4 atteigne une température d'environ 200°C. A cette fin, on utilise par exemple une fréquence de 27 MHz qui est appliquée pendant 15 à 20 secondes. Les essais réalisés ont permis de constater que les électrodes, le support isolant 25 et la bordure isolante 24 atteignent une température de 40 à 50°C seulement. La température de 200°C de la plaque plastique 4 est plus haute que celle utilisée avec les procédés connus jusqu'ici et permet d'appliquer ensuite une pression réduite, ce qui évite la déformation alentour de la zone d'empreinte proprement dite.

Une fois cette température obtenue, on exerce par l'intermédiaire du vérin 11 la pression de moulage pour obtenir l'empreinte, par exemple de l'ordre de 20 à 25 kg/cm², soit 5 à 10 fois moins que pour les procédés connus, on interrompt l'alimentation des électrodes et, en maintenant cette pression de moulage, on fait refroidir la plaque originale 19, l'électrode 7' ainsi que la plaque plastique 4, par circulation d'eau froide dans les dispositifs 8, 18. Quand la plaque originale 19 a atteint la température ambiante, c'est-à-dire environ 20°C, ce qui dure à peu près 2 à 2,5 minutes, on relâche la pression et on écarte la plaque originale 19 de la plaque plastique 4 en soulevant le dispositif porte-plaque. Les opérations pour produire une seule empreinte durent donc environ 5 minutes.

Ensuite on déplace la plaque plastique 4 dans une deuxième position ajustée, le déplacement étant effectué soit dans la direction F2, soit dans la direction F3, et on recommence les mêmes opérations que précédemment pour obtenir la deuxième empreinte et ainsi de suite jusqu'à ce que l'on ait appliqué sur la plaque 4 autant d'empreintes, en lignes et en colonnes, que désiré.

On obtient ainsi un moule sous la forme d'une plaque à multiples empreintes 23 (figure 1). Etant donné que l'on est parti d'une plaque originale gravée, le moule que l'on obtient par le procédé est un moule plastique positif. Néanmoins, on obtiendrait un moule plastique négatif en suivant le même procédé, si l'on partait d'une plaque originale positive qui, elle-même, aurait été reproduite à partir d'une plaque primitive gravée.

Par ailleurs, le cas échéant, il est possible de renoncer à un préchauffage.

Si l'on utilise l'installation selon les figures 1 à 3 pour la mise en oeuvre du procédé, après la phase de préchauffage, on descend le dispositif porte-plaque jusqu'à ce que l'extrémité inférieure du soufflet de la chambre 20 vienne en contact avec la plaque plastique 4 et on crée dans cette chambre, à l'aide d'un dispositif non représenté, un vide d'environ 80 %. Le moulage sous vide pourrait avoir, dans certaines conditions, des avantages, mais n'est pas nécessaire. Bien sûr, après refroidissement et avant de monter la plaque originale 19, on relie la chambre 20 à l'atmosphère extérieure.

Au lieu que ce soit le dipositif porte-plaque qui descende pour appliquer une compression sur la plaque plastique 4, on peut prévoir que le porte-plaque est fixe et que c'est l'électrode 7 avec son support qui montent pour appliquer la pression.

## Revendications

1. Installation pour la fabrication d'un moule sous la forme d'une plaque plastique thermoformable à multiples empreintes, de préférence pour la reproduction des plaques d'impression taille-douce, à partir d'une plaque originale (19) en métal comportant un dessin (19b) gravé ou en relief, au moyen de moulage par pression sous chauffage par haute fréquence de ladite plaque plastique (4), comprenant un bâti (1) muni d'un dispositif porte-électrode (6,8; 8,26) pour supporter une électrode à plaque (7) formant une première électrode, et un dispositif porte-plaque (13 à 18) pour supporter la plaque originale (19) formant une deuxième électrode et disposée à distance de, et opposée à, ladite première électrode (7), un appareil à haute fréquence (22) pour appliquer un champ à haute fréquence à travers les deux électrodes, au moins un coulisseau-cadre (3) pour supporter la plaque plastique (4), disposé entre et déplaçable relativement à la plaque originale (19) et ladite électrode (7) selon deux directions horizontales perpendiculaires (F2 et F3), et des moyens (11, 12) pour changer la distance entre lesdits dispositifs porte-électrode et porte-plaque, caractérisée par le fait que ladite première électrode à plaque (7, 7') a un contour (7a) qui correspond à une enveloppe (19a, 19a') du dessin (19b) de la plaque originale (19) et donc de l'empreinte à produire, et que le bord de ladite première électrode (7, 7') est entouré par une bordure (24) isolante avec l'arête interne adaptée audit contour et d'épaisseur égale à celle de ladite première électrode.

2. Installation selon la revendication 1, caractérisée par le fait que ladite première électrode à plaque (7,7') est portée par un support isolant (25).

3. Installation selon les revendications 1 et 2, caractérisée par le fait que ledit support isolant (25) et ladite bordure isolante (24) sont une seule pièce en plastique formée de préférence d'un matériau élastique, sur la surface de laquelle un évidement de la forme dudit contour a été creusé.

4. Installation selon l'une des revendications 1 à 3, caractérisée par le fait que la première électrode (7,7') et sa bordure (24) sont recouvertes par une couche mince isolante d'un matériau rigide (27), préférablement du mica.

5. Installation selon l'une des revendications 1 à 4, caractérisée par le fait qu'au moins l'un des dispositifs porte-plaque et porte-électrode comprend des moyens (8, 8a, 8b; 18, 18a, 18b ) de chauffage et de refroidissement, préférablement par circulation d'un liquide.

6. Installation selon l'une des revendications 1 à 5, caractérisée par le fait que le dispositif porte-plaque comprend des moyens (18, 18a, 18b) de chauffage et de refroidissement formés par une cage métallique plate qui se trouve en contact avec la plaque originale (19) et qui forme avec celle-ci la deuxième électrode à plaque, que ledit dispositif porte-électrode comprend une selle d'appui (5) sur laquelle sont disposés des moyens (8, 8a, 8b) de chauffage et de refroidissement formés d'une cage plate, supportant la première électrode (7, 7'), et que le dispositif porte-plaque (13 à 18) est muni de moyens, de préférence d'un vérin (11) à double effet, pour être déplacé verticalement et appliquer une compression sur la plaque plastique (4).

7. Installation selon la revendication 6, caractérisée par le fait que c'est l'ensemble formé par ladite plaque originale (19) et ladite cage (18) qui est relié par un conducteur (28) à la sortie sous tension de l'appareil à haute fréquence (22), et que ladite cage (18) est montée d'une manière isolante au moyen d'une plaque isolante (6'), tandis que ladite première électrode (7, 7') est reliée à la terre.

8. Installation selon l'une des revendications 2 à 7, caractérisée par le fait que le support isolant (25) portant ladite première électrode (7, 7') et sa bordure (24) est posé sur une plaque isolante (26) fixée elle-même sur une plaque métallique (29), le tout étant préassemblé par des vis à tête fraisée (30) traversant tous les éléments mentionnés et affleurant la surface de la première électrode, tous ces éléments étant fixés par des moyens de fixation sur une base du dispositif porte-électrode, notamment une cage d'un dispositif (18) de chauffage et de refroisisement.

9. Procédé de mise en action de l'installation selon la revendication 1 caractérisé par les pas suivants:
a) on prépare une plaque plastique en matériau thermo-formable présentant essentiellement les dimensions du moule désiré;
b) on prépare une première électrode à plaque dont le contour correspond à l'enveloppe du dessin de la plaque originale et donc de l'empreinte à produire;
c) on entoure le bord de ladite première électrode à plaque par une bordure isolante dont l'arête interne est adaptée audit contour et dont l'épaisseur est égale à l'épaisseur de ladite première électrode à plaque;
d) on place ladite plaque plastique, dans une position ajustée correspondant à l'emplacement de la première empreinte à produire, entre la première électrode à plaque et la plaque originale qui est utilisée comme une deuxième électrode à plaque;
e) on approche les deux électrodes de ladite plaque plastique et on la soumet à un chauffage par haute fréquence en produisant entre les deux électrodes un champ à haute fréquence pendant un temps déterminé jusqu'à ce que la plaque plastique ait atteint une température appropriée pour le moulage;
f) on produit la première empreinte sur la plaque plastique par la mise sous compression de celle-ci en appliquant la pression de moulage;
g) on refroidit la plaque plastique en maintenant la pression de moulage;
h) on écarte les électrodes et on effectue des déplacements relatifs entre, d'une part, la plaque plastique et d'autre part, les électrodes, successivement dans les autres positions ajustées correspondant aux autres empreintes à produire et, dans chaque position, on répète les pas e) à g) pour reproduire l'empreinte suivante.

10. Procédé selon la revendication 9, caractérisé en ce que les électrodes sont préchauffées avant la mise en contact avec la plaque plastique.

## Patentansprüche

1. Einrichtung zur Herstellung einer Form in Gestalt einer wärmeverformbaren Mehrfachform-Kunststoffplatte, vorzugsweise zur Reproduktion von Stichtiefdruckplatten, unter Verwendung einer Originalplatte (19) aus Metall, die ein graviertes oder erhabenes Muster (19b) aufweist, durch Warmpressen der erwähnten Kunststoffplatte (4) unter Hochfrequenzerhitzung, mit einem Gestell (1), das mit einer Elektrodenhaltevorrichtung (6, 8; 8, 26) zum Halten einer, eine erste Elektrode bildenden Plattenelektrode (7) und mit einer Plattenhaltevorrichtung (13 bis 18) zum Halten der, eine zweite Elektrode bildenden Originalplatte (19) versehen ist, welche im Abstand von, und gegenüber der erwähnten ersten Elektrode (7) angeordnet ist, mit einem Hochfrequenzgerät (22) zum Anlegen eines Hochfrequenzfeldes quer zwischen den beiden Elektroden, mit wenigstens einem verschiebbaren Rahmen (3) zum Tragen der Kunststoffplatte (4), welcher zwischen der Originalplatte (19) und der erwähnten Elektrode (7) angeordnet sowie relativ zu diesen längs zweier horizontaler, zueinander im rechten Winkel verlaufender Richtungen (F2 und F3) verschiebbar ist, und mit Mitteln (11, 12) zum Aendern des Abstands zwischen den erwähnten Elektrodenhalte- und Plattenhaltevorrichtungen, dadurch gekennzeichnet, dass die erwähnte erste Plattenelektrode (7, 7') einen Umriss (7a) hat, welcher einer Einhüllenden (19a, 19a') des Musters (19b) der Originalplatte (19) und damit des herzustellenden Abdrucks entspricht, und dass der Rand der erwähnten ersten Elektrode (7, 7') von einer isolierenden Umrandung (24) umgeben ist, deren Innenkante dem erwähnten Umriss angepasst und deren Dicke gleich der der erwähnten ersten Elektrode ist.

2. Einrichtung nach Anspruch 1, dadurch gekennzeichnet, dass die erwähnte erste Plattenelektrode (7, 7') von einer isolierenden Auflage (25) getragen wird.

3. Einrichtung nach den Ansprüchen 1 und 2, dadurch gekennzeichnet, dass die erwähnte isolierende Auflage (25) und die erwähnte isolierende Umrandung (24) einen einzigen, vorzugsweise aus einem elastischen Material bestehenden Teil aus Kunststoff bilden, auf dessen Oberfläche eine Vertiefung in Form des erwähnten Umrisses angebracht ist.

4. Einrichtung nach einem der Ansprüche 1 bis 3, dadurch gekennzeichnet, dass die erste Elektrode (7, 7') und ihre Umrandung (24) von einer dünnen isolierenden Schicht aus starrem Material (27), vorzugsweise aus Glimmer, bedeckt sind.

5. Einrichtung nach einem der Ansprüche 1 bis 4, dadurch gekennzeichnet, dass wenigstens eine der Plattenhalte- und Elektrodenhaltevorrichtungen Mittel (8, 8a, 8b; 18, 18a, 18b) zum Erwärmen und zum Kühlen, vorzugsweise durch Umlauf einer Flüssigkeit, aufweist.

6. Einrichtung nach einem der Ansprüche 1 bis 5, dadurch gekennzeichnet, dass die Plattenhaltevorrichtung Mittel (18, 18a, 18b) zum Erwärmen und zum Kühlen aufweist, die durch einen metallischen flachen Behälter gebildet sind, welcher sich in Berührung mit der Originalplatte (19) befindet und mit dieser die zweite Plattenelektrode bildet, dass die erwähnte Elektrodenhaltevorrichtung eine Unterlegplatte (5) aufweist, auf der Mittel (8, 8a, 8b) zum Erwärmen und zum Kühlen angeordnet sind, welche von einem, die erste Elektrode (7, 7') tragenden flachen Gehäuse gebildet sind, und dass die Plattenhaltevorrichtung (13 bis 18) mit Mitteln, vorzugsweise einem doppelwirkenden Zylinder (11), zum vertikalen Verschieben und zum Ausüben eines Drucks auf die Kunststoffplatte (4) versehen ist.

7. Einrichtung nach Anspruch 6, dadurch gekennzeichnet, dass die aus der erwähnten Originalplatte (19) und dem erwähnten Gehäuse (18) gebildete Konstruktion durch einen Leiter (28) mit dem unter Spannung stehenden Ausgang des Hochfrequenzgeräts (22) verbunden ist und dass das erwähnte Gehäuse (18) in isolierender Weise mit Hilfe einer isolierenden Platte (6') montiert ist, während die erwähnte erste Elektrode (7, 7') an Masse angeschlossen ist.

8. Einrichtung nach einem der Ansprüche 2 bis 7, dadurch gekennzeichnet, dass die isolierende Auflage (25), welche die erwähnte erste Elektrode (7, 7') und ihre Umrandung (24) trägt, auf einer isolierenden Platte (26) angeordnet ist, welche selber auf einer metallischen Platte (29) befestigt ist, wobei das Ganze mittels Senkschrauben (30), die alle erwähnten Elemente durchqueren und deren Köpfe mit der Oberfläche der ersten Elektrode in einer Ebene liegen, vorgefertigt ist und wobei alle diese Elemente durch Befestigungsmittel auf einer Unterlage der Elektrodenhaltevorrichtung, insbesondere einem Gehäuse einer Erwärmungs- und Kühlvorrichtung (18), befestigt sind.

9. Verfahren zum Betrieb der Einrichtung nach Anspruch 1, gekennzeichnet durch die folgenden Schritte:
a) man fertigt eine Kunststoffplatte aus wärmeverformbarem Material an, welche im wesentlichen die Abmessungen der gewünschten Form hat;
b) man fertigt eine erste Plattenelektrode an, deren Umriss der Einhüllenden des Musters der Originalplatte und damit des zu erzeugenden Abdrucks entspricht;
c) man umgibt den Rand der erwähnten ersten Plattenelektrode mit einer isolierenden Umrandung, deren Innenkante dem erwähnten Umriss angepasst ist und deren Dicke gleich der Dicke der erwähnten ersten Plattenelektrode ist;
d) man plaziert die erwähnte Kunststoffplatte an einer der Stelle des ersten zu erzeugenden Abdrucks entsprechenden justierten Position zwischen der ersten Plattenelektrode und der Originalplatte, welche als zweite Plattenelektrode verwendet wird;
e) man nähert die beiden Elektroden der erwähnten Kunststoffplatte an und unterwirft sie einer Erwärmung durch Hochfrequenz, indem zwischen den beiden Elektroden ein Hochfrequenzfeld während einer bestimmten Zeit erzeugt wird, bis die Kunststoffplatte eine für das Formen geeignete Temperatur erreicht hat;
f) man erzeugt den ersten Abdruck auf der Kunststoffplatte durch Pressung derselben, indem der Pressdruck ausgeübt wird;
g) man kühlt die Kunststoffplatte ab, wobei der Pressdruck aufrechterhalten wird;
h) man entfernt die Elektroden voneinander, und man führt sukzessive relative Verschiebungen zwischen der Kunststoffplatte einerseits und den Elektroden andererseits in die anderen justierten Positionen aus, welche den anderen zu erzeugenden Abdrücken entsprechen, und man wiederholt in jeder Position die Schritte e) bis g), um den folgenden Abdruck zu reproduzieren.

10. Verfahren nach Anspruch 9, dadurch gekennzeichnet, dass die Elektroden vor der Berührung mit der Kunststoffplatte vorgewärmt werden.

## Claims

1. A plant for manufacturing a mold in the form of a thermo-formable, multiple-impression plastic plate, in particular for reproducing intaglio printing plates, using an original plate (19) made of metal which bears an engraved or embossed design (19b), and by means of compression molding with high-frequency heating of said plastic plate (4), comprising a structure (1) provided with an electrode-carrying device (6, 8; 8, 26) for supporting a plate electrode (7), which forms a first electrode, and with a plate-carrying device (13 to 18) for supporting the original plate (19), which forms a second electrode and is arranged at a distance from and opposite to the said first electrode (7); a high frequency apparatus (22) for applying a high frequency field between the two electrodes; at least one sliding frame (3) for supporting the plastic plate (4), said sliding frame being arranged between and movable with respect to said original plate (19) and said plate electrode (7) in two perpendicular horizontal directions (F2 and F3); and comprising means (11, 12) for changing the distance between the said electrode-carrying and plate-carrying devices, characterized in that the said first plate electrode (7, 7') has an outline (7a), which corresponds to an envelope (19a, 19a') of the design (19b) of the original plate (19) and therefore of the impression to be produced, and in that the edge of the said first electrode (7, 7') is surrounded by an insulating border (24), with the inside edge adapted to the said outline and of a thickness equal to that of the said first plate electrode.

2. The plant as claimed in claim 1, characterized in that the said first plate electrode (7, 7') is carried by an insulating support (25)

3. The plant as claimed in claims 1 and 2, characterized in that the said insulating support (25) and the said insulating border (24) are one plastic piece, preferably consisting of an elastic material, on the surface of which a recess with the shape of the said outline has been made.

4. The plant as claimed in one of claims 1 to 3, characterized in that the said first electrode (7, 7') and its border (24) are covered by a thin insulating layer of a rigid material (27), preferably mica.

5. The plant as claimed in one of claims 1 to 4, characterized in that at least one of the plate-carrying and electrode-carrying devices comprises means (8, 8a, 8b; 18, 18a, 18b) for heating and cooling, preferably by circulating a liquid.

6. The plant as claimed in one of claims 1 to 5, characterized in that the plate-carrying device comprises heating and cooling means (18, 18a, 18b) consisting of a flat metal box which is in contact with the original plate (19) and which forms the second plate electrode with the latter, in that the said electrode-carrying device comprises a support saddle (5) on which heating and cooling means (8, 8a, 8b) consisting of a flat box supporting the first electrode (7 7'), are arranged and in that the plate-carrying device (13 to 18) is provided with means, preferably with a double-acting jack (11), for displacing said plate-carrying device vertically and applying a compressive force onto the plastic plate (4).

7. The plant as claimed in claim 6, characterized in that it is the assembly consisting of the said original plate (19) and the said box (18) which is connected by a conductor (28) to the live outlet of the high-frequency apparatus (22), and in that the said box (18) is mounted in an insulating manner by means of an insulating plate (6'), whereas the said first electrode (7, 7') is grounded.

8. The plant as claimed in one of claims 2 to 7, characterized in that the insulating support (25) carrying the said first electrode (7, 7') and its border (24) is positioned on an insulating plate (26) itself fixed onto a metal plate (29), the whole being preassembled by means of countersunk-head screws (30) which pass through all of the elements mentioned and are flush with the surface of the first electrode, all of these elements being fixed by fixing means onto a base of the electrode-carrying device, in particular on a box of a heating and cooling device (18).

9. A method of actuating the plant as claimed in claim 1, characterized by the following steps :
a) a plastic plate made of thermo-formable material having essentially the dimensions of the mold required, is prepared;
b) a first plate electrode, the outline of which corresponds to the envelope of the design of the original plate and therefore of the impression to be produced, is prepared;
c) the edge of the said first plate electrode is surrounded by an insulating border, the inside edge of which is adapted to the said outline and the thickness of which is equal to the thickness of the said first plate electrode;
d) the said plastic plate is placed, in an adjusted position corresponding to the location of the first impression to be produced, between the first plate electrode and the original plate which is used as a second plate electrode;
e) the two electrodes are brought near to the said plastic plate and the latter is subjected to high-frequency heating by producing, between the two electrodes, a high-frequency field for a given period of time until the plastic plate has reached a temperature suitable for molding;
f) the first impression is produced on the plastic plate by compressing the latter by applying the molding pressure;
g) the plastic plate is cooled, while the molding pressure is maintained;
h) the electrodes are separated and relative displacement is effected between, on the one hand, the plastic plate and, on the other hand, the electrodes, successively in the other adjusted positions corresponding to the other impressions to be produced and, in each position, the steps e) to g) are repeated in order to reproduce the next impression.

10. The method as claimed in claim 9, characterized in that the electrodes are preheated before being brought into contact with the plastic plate.
